# EUROPÄISCHE PATENTSCHRIFT

(11) **EP 2 479 875 B1**
(45) Veröffentlichungstag und Bekanntmachung des Hinweises auf die Patenterteilung: **04.07.2018**
(21) Anmeldenummer: 12150991.3
(22) Anmeldetag: 12.01.2012
(51) Int. Cl.: H02K 5/20

(54) **Flüssigkeitsgekühltes Gehäuse mit Lagerschild für elektrische Maschine**
Liquid cooled housing with bearing shield for electrical machine
Boîtier à liquide refroidi doté d'une flasque pour machine électrique

(30) Priorität: 19.01.2011 DE 102011008945
(43) Veröffentlichungstag der Anmeldung: 25.07.2012
(73) Patentinhaber: Bombardier Transportation GmbH, 10785 Berlin (DE)
(72) Erfinder: Moser, Edgar, 1210 Wien (AT); Ganster, Markus, 8230 Hartberg (AT); Cepak, Werner, 1150 Wien (AT)
(74) Vertreter: Patentanwälte Bressel und Partner mbB

(56) Entgegenhaltungen:
- WO-A1-97/44882
- WO-A1-2006/106086
- GB-A- 1 428 445

## Beschreibung

Die Erfindung betrifft ein flüssigkeitsgekühltes Gehäuse für eine elektrische Maschine, wobei das Gehäuse ein Lagerschild aufweist. Das Lagerschild weist ein Lager auf, welches die Rotorwelle der Maschine drehbar lagert. Die Erfindung betrifft ferner eine elektrische Maschine mit einem solchen flüssigkeitsgekühlten Gehäuse und ein Schienenfahrzeug, das eine solche elektrische Maschine als Antriebsmotor für die Fortbewegung des Schienenfahrzeugs aufweist.

Flüssigkeitsgekühlte Gehäuse für elektrische Maschinen können nach unterschiedlichen Verfahrensweisen hergestellt werden. Insbesondere ist es bekannt, das Gehäuse, in dem später die elektrische Maschine angeordnet wird, durch Gießen herzustellen. Eine andere Möglichkeit ist das Sintern, bei dem ein Granulat des Gehäusematerials bei hoher Temperatur und unter Druck in eine Form gepresst wird.

Sowohl beim Gießen als auch beim Sintern wird eine Form benötigt, die ein Negativ des herzustellenden Gehäuses oder Gehäuseteils bildet. Sowohl die Herstellung der Negativform als auch die Herstellung des Mantels unter Verwendung der Form sind aufwendig und können nur von speziell darauf eingerichteten Fachbetrieben und geschultem Personal durchgeführt werden. Außerdem ist es bei der Verwendung von Negativformen besonders aufwendig, Kanäle für die Kühlflüssigkeit vorzusehen. Eine Möglichkeit besteht darin, ein oder mehrere Kühlrohre vor dem Gießen oder Sintern in die Form einzubringen und durch Gießen oder Sintern die Rohre in das Gussmaterial oder Sintermaterial einzubetten. Dies hat jedoch die Nachteile, dass Rohre einen verhältnismäßig kleinen Querschnitt aufweisen, durch den die Kühlflüssigkeit hindurchströmen kann, und dass es schwierig ist, zwischen den Rohren und dem Gussmaterial oder Sintermaterial unerwünschte Hohlräume zu vermeiden. Solche Hohlräume verschlechtern den Wärmeübergang auf die Kühlflüssigkeit erheblich. In jedem Fall muss die Wärme sowohl durch das Gussmaterial oder Sintermaterial und die Rohrwand hindurch treten, um von der Kühlflüssigkeit aufgenommen zu werden, wodurch der Wärmeübergang verschlechtert wird.

Ferner ist es bekannt, ein Motorgehäuse durch Verbinden von Einzelteilen herzustellen. Z. B. kann ein Stahlmantel in Form eines Rohres die Innenoberfläche des Gehäuses bilden und können auf der Außenseite des Rohres Leisten zur mechanischen Verstärkung aufgeschweißt sein. Das Lagerschild wird in diesem Fall stirnseitig auf das Rohr aufgeschraubt, d. h. insbesondere an mit dem Rohr verbundenen Verstärkungsteilen festgeschraubt.

Die Herstellung des Mantels durch Verbinden von Einzelteilen hat den Vorteil, dass keine Negativformen benötigt werden und auch der aufwendige Prozess des Gießens oder Sinterns entfällt. Die Investitionen in die Mittel zum Herstellen des flüssigkeitsgekühlten Motormantels sind daher erheblich geringer, was eine dezentrale Fertigung von größeren Stückzahlen des Motormantels an verschiedenen Orten ermöglicht.

Die Flüssigkeitskühlung mit Kanälen, durch die die Kühlflüssigkeit beim Betrieb der Maschine hindurch strömt, erfordert jedoch Dichtigkeit gegen unerwünschten Flüssigkeitsaustritt. Dies gilt insbesondere im Übergangsbereich zwischen Mantel-Umfangsfläche, die den Gehäuseinnenraum umläuft, und Lagerschild. Eine Möglichkeit besteht darin, wie oben bei dem Gießen und Sintern erwähnt, zusätzlich Rohre als Kanäle für die Kühlflüssigkeit zu verwenden. Diese Rohre können an andere Teile des Gehäuses angeschweißt oder angelötet werden. Dadurch verschlechtert sich aber aus den oben bereits genannten Gründen der Wärmeübergang auf die Kühlflüssigkeit.

WO 97/44882 A1 beschreibt eine Flüssigkeitskühlung für elektrische Maschinen. Es wird eine Ausführungsform eines Stahlrohres zur Führung von Kühlflüssigkeit zur Kühlung der Lager einer elektrischen Maschine beschrieben, bei der ein Gussgehäuse verwendet wird. Ein Lagerschild ist im Gehäuse integriert und wird mit diesem in einem Arbeitsvorgang hergestellt. Die Kühlkanäle werden durch Rohre aus einem Material mit höherem Schmelzpunkt als das Material des Gehäuses gebildet. Die Kühlkanäle enden an dem anderen, über Schrauben und Bohrungen im Gehäuse befestigten Lagerschild in Ringkanalsegmenten. Die beiden Öffnungen eines ringförmigen Kühlkanals, der um das Lager der Maschine herum am Lagerschild angeordnet ist, münden in den Ringkanalsegmenten. Somit wird der ringförmige Kühlkanal parallel zu den Kühlkanälen im Gehäuse von der Kühlflüssigkeit durchströmt.

Die GB 1 428 445 A beschreibt Pumpeinheiten, deren Motor im Wesentlichen über seinen gesamten Außenumfang von einem Kühlmantel umgeben ist, durch den Flüssigkeit gepumpt wird und durch den eine teilweise doppelwandige Konstruktion des Motorgehäuses gebildet ist. Das Lagerschild am Ende mit der Pumpe ist integral mit dem Gehäuse gebildet. Das Lagerschild an dem anderen Ende ist mittels Schrauben und Muttern am Gehäuse angezogen. Um das Motorgehäuse ist ein im Wesentlichen zylindrischer Hohlraum ausgebildet, der als Kühlhülse dient. Die äußere Hülse ist gegen das Gehäuse durch sich in Längsrichtung erstreckende Rippen abgestützt, die in Längsrichtung Passagen bilden, welche an einem Ende in dem pumpseitigen Lagerschild in eine Kammer münden.

Es ist eine Aufgabe der vorliegenden Erfindung, ein flüssigkeitsgekühltes Gehäuse mit Lagerschild und ein Verfahren zum Herstellen eines Gehäuses anzugeben, die es erlauben, das Gehäuse mit Flüssigkeitskühlung aus Einzelteilen herzustellen und dennoch eine effektive Kühlung insbesondere des Lagerschildes zu ermöglichen.

Eine Grundidee der vorliegenden Erfindung besteht darin, das Lagerschild und den in Umfangsrichtung laufende Mantel (im Folgenden: Umfangsmantel), der den Gehäuseinnenraum umläuft, durch Fügen, insbesondere Schweißen oder Löten, miteinander einstückig (anders ausgedrückt: unlösbar) zu verbinden. Dadurch, dass das Lagerschild nicht an das in Umfangsrichtung verlaufende Gehäuse angeschraubt wird oder auf andere Weise lösbar mit diesem verbunden ist, sondern ein einstückiger Mantel mit Lagerschild geschaffen wird, wird der Wärmeübergang zwischen dem in der Regel heißeren Lagerschild und den anderen Gehäuseteilen verbessert. Das Lagerschild und der Umfangsmantel sind bzw. werden beide mit einer Flüssigkeitskühlung ausgestattet. Die einstückige Verbindung des Umfangsmantels und des Lagerschildes hat in diesem Fall den weiteren Vorteil, dass zumindest in Teilbereichen des Materialübergangs zwischen Umfangsmantel und Lagerschild, vorzugsweise aber sogar umlaufend am stirnseitigen Ende des Umfangsmantels ein flüssigkeitsdichter Materialübergang geschaffen ist bzw. wird. Es ist daher möglich, Kühlflüssigkeit ohne die zusätzliche Verwendung eines Rohres von dem Umfangsmantel zu dem Lagerschild zu leiten und/oder umgekehrt.

Insbesondere wird daher vorgeschlagen: Ein Gehäuse für eine elektrische Maschine, wobei das Gehäuse aufweist:
- einen Umfangsmantel, der einen Gehäuseinnenraum zur Aufnahme der elektrischen Maschine in Umfangsrichtung umläuft,
- ein Lagerschild zur Lagerung einer Rotorwelle der Maschine,
- Kanäle zum Hindurchleiten von Kühlflüssigkeit,
wobei
- der Umfangsmantel und das Lagerschild einstückig miteinander verbunden sind,
- an und/oder in dem Umfangsmantel sowie in dem Lagerschild jeweils zumindest ein Kanal zum Hindurchleiten von Kühlflüssigkeit vorhanden ist und
- in dem Übergangsbereich des Umfangsmantels zu dem Lagerschild zumindest ein Flüssigkeitsübertritt von einem Kanal des Umfangsmantels zu einem Kanal des Lagerschildes und/oder umgekehrt ausgebildet ist.

Insbesondere ist das Gehäuse aus mehreren Einzelteilen gefertigt, wozu der Umfangsmantel und das Lagerschild gehören. Diese Teile werden vorzugsweise durch Schweißen oder Löten unlösbar miteinander verbunden. Insbesondere wird der Kanal des Umfangsmantels und/oder der Kanal des Lagerschildes durch Zusammenfügen einer Mehrzahl von Einzelteilen hergestellt. Es wird daher keine zusätzliche Rohrleitung benötigt, welche den Wärmeübergang auf die Kühlflüssigkeit in der Rohrleitung verschlechtern würde.

Vorzugsweise ist der zumindest eine Kanal des Umfangsmantels in diesen integriert. In bevorzugter Ausgestaltung wird eine Innenwand des Umfangsmantels an ihrer Außenoberfläche mit einer zusätzlichen Kanalwand verbunden (vorzugsweise werden die Teile miteinander verschweißt oder verlötet), sodass sowohl die Innenwand als auch die zusätzliche Kanalwand Wände des Flüssigkeitskanals bilden. Eine solche Ausgestaltung eines Flüssigkeitskanals ist auf einfache Weise, ohne Negativform herstellbar und erlaubt sehr große Wärmeübergangsflächen für den Wärmeübergang auf die Kühlflüssigkeit in dem Kanal. Insbesondere kann die Wärme über sehr große Flächenbereiche an der Außenseite der Innenwand auf die Kühlflüssigkeit übergehen.

In spezieller Ausgestaltung sind mehrere der zusätzlichen Kanalwände an der Außenseite der Innenwand mit dieser verbunden. Insbesondere können diese zusätzlichen Kanalwände langgestreckte Elemente in der Form von Stegen oder Kühlrippen sein, die sich vorzugsweise in Längsrichtung des Gehäuses erstrecken (d.h. mit ihrer Längsachse in der Längsrichtung erstrecken). Die Längsrichtung ist durch die Drehachse der Rotorwelle der Maschine definiert. Die lang gestreckten Elemente verlaufen daher vorzugsweise parallel zu der Drehachse der Rotorwelle. Jedes dieser lang gestreckten Elemente endet vorzugsweise in einem Abstand zu einem der in Längsrichtung liegenden stirnseitigen Enden der Innenwand, so dass die den Kanal oder die Kanäle durchströmende Kühlflüssigkeit von einem Zwischenraum zwischen zwei benachbarten lang gestreckten Elementen über den Zwischenraum zwischen einem lang gestreckten Element und dem stirnseitigen Ende der Innenwand in einen benachbarten Zwischenraum zwischen dem lang gestreckten Element und einem weiteren lang gestreckten Element strömen kann. Auf diese Weise wird vorzugsweise ein Kanal gebildet, der serpentinenförmig um den Außenumfang der Innenwand herumführt. Bei dieser Ausführungsform ist die Kühlflüssigkeit mit einem besonders großen Teil der Außenoberfläche der Innenwand in Kontakt, so dass der Wärmeübergang auf die Kühlflüssigkeit besonders gut ist. Die Grenzfläche der Innenwand zu der jeweiligen zusätzlichen Kanalwand, z. B. zu dem Steg, kann sehr schmal sein.

Unabhängig von der konkreten Ausgestaltung der zumindest einen zusätzlichen Kanalwand wird es bevorzugt, dass an einer aus Sicht der Innenwand gegenüberliegenden Seite der zusätzlichen Kanalwand ein weiteres Teil befestigt ist, insbesondere eine Außenwand des Umfangsmantels, wobei das Teil ebenfalls eine Kanalwand bildet. Besonders bevorzugt wird, dass die Innenwand und die Außenwand jeweils rohrförmig sind, wobei die Rohrform insbesondere zylindrisch ist und die Rohre vorzugsweise koaxial zueinander und zur RotorDrehachse angeordnet sind. Es können jedoch auch andere Rohrformen und eine nicht koaxiale Anordnung realisiert werden. In jedem Fall bilden die Innenwand und die Außenwand einen Zwischenraum für die Durchströmung der Kühlflüssigkeit. In diesem Ausführungsbeispiel beranden daher zumindest die Innenwand, die zumindest eine zusätzliche Kanalwand und die Außenwand den zumindest einen Kanal des Umfangsmantels. Alle diese Teile werden vorzugsweise flüssigkeitsdicht durch Schweißen oder Löten miteinander verbunden.

Gemäß den Patentansprüchen weist das Lagerschild eine Innenwand auf, die eine Innenoberfläche des Gehäuses bildet, d. h. den Gehäuseinnenraum berandet. An der Außenseite der Innenwand ist zumindest eine zusätzliche Kanalwand zur Bildung des zumindest einen Kanals des Lagerschildes mit der Innenwand verbunden, so dass die Innenwand und die zumindest eine zusätzliche Kanalwand sowie optional weitere Teile den oder die Kanäle des Lagerschildes beranden.

Für Vorteile und Ausgestaltungen wird auf die Beschreibung des Umfangsmantels verwiesen, wobei die Unterschiede zwischen dem Umfangsmantel und dem Lagerschild zu beachten sind. Das Lagerschild erstreckt sich nicht in Umfangsrichtung des Gehäuses, sondern befindet sich an der einen Stirnseite des Gehäuses. Daher wird es zwar für die zumindest eine zusätzliche Kanalwand auch bevorzugt, dass diese ein lang gestrecktes Element, z. B. ein Steg oder eine Kühlrippe ist, jedoch erstreckt sich das lang gestreckte Element nicht in der Längsrichtung des Gehäuses, sondern vorzugsweise umläuft es zumindest teilweise die Drehachse der Rotorwelle der Maschine. Wie auch bei dem Umfangsmantel wird es bevorzugt, dass außer der zumindest einen zusätzlichen Kanalwand auch eine Außenwand des Lagerschildes vorhanden ist, die insbesondere parallel zu der Innenwand verläuft.

Insbesondere wenn sowohl der Umfangsmantel als auch das Lagerschild jeweils eine Innenwand und eine Außenwand aufweisen, zwischen denen zumindest ein Kanal für Kühlflüssigkeit gebildet ist, wird es bevorzugt, dass im Übergangsbereich zwischen dem Umfangsmantel und dem Lagerschild zumindest eine Durchtrittsöffnung zwischen diesen Zwischenräumen vorhanden ist, so dass entweder dieselbe Kühlflüssigkeit sowohl durch den Zwischenraum des Umfangsmantels als auch durch den Zwischenraum des Lagerschildes strömen kann (serielle Anordnung der Kanäle), oder ein gemeinsamer Anschluss für die Kanäle des Umfangsmantels und des Lagerschildes vorgesehen sein kann, wobei in dem letztgenannten Fall die Kanäle des Umfangsmantels und des Lagerschildes (strömungstechnisch) parallel angeordnet sind.

Zur Erfindung gehört weiterhin eine elektrische Maschine mit dem Gehäuse in einer der Ausgestaltungen, die in dieser Beschreibung beschrieben sind. Die Rotorwelle der Maschine erstreckt sich durch das Lagerschild hindurch und wird von zumindest einem Lager des Lagerschildes derart gelagert, dass sie um ihre Drehachse rotieren kann.

Außerdem gehört zur Erfindung ein Schienenfahrzeug mit der elektrischen Maschine als Antriebsmotor. Die Rotorwelle treibt über entsprechende Kraftübertragungsmittel zumindest ein Rad des Schienenfahrzeugs an. Ferner gehören zum Umfang der Erfindung Verfahren zur Herstellung des Gehäuses, der elektrischen Maschine und des Schienenfahrzeugs. Insbesondere wird vorgeschlagen: Ein Verfahren zum Herstellen eines Gehäuses für eine elektrische Maschine, wobei für das Gehäuse bereitgestellt werden:
- ein Umfangsmantel, der einen Gehäuseinnenraum zur Aufnahme der elektrischen Maschine in Umfangsrichtung umläuft, und
- ein Lagerschild zur Lagerung einer Rotorwelle der Maschine,
wobei
- der Umfangsmantel und das Lagerschild einstückig miteinander verbunden werden,
- durch Verbinden von Einzelteilen an und/oder in dem Umfangsmantel sowie an und/oder in dem Lagerschild jeweils zumindest ein Kanal zum Hindurchleiten von Kühlflüssigkeit gebildet wird und
- in dem Übergangsbereich des Umfangsmantels zu dem Lagerschild zumindest ein Flüssigkeitsübertritt von einem Kanal des Umfangsmantels zu einem Kanal des Lagerschildes und/oder umgekehrt ausgebildet wird.

Weiterbildungen des Verfahrens ergeben sich aus der Beschreibung von Ausgestaltungen des Gehäuses. Zur Herstellung einer elektrischen Maschine mit dem Gehäuse wird die elektrische Maschine in dem Gehäuseinnenraum angeordnet und die Rotorwelle der Maschine durch eine Durchtrittsöffnung im Lagerschild hindurchgeführt, so dass die Rotorwelle von dem Lagerschild drehbar gelagert wird. Zur Herstellung eines Schienenfahrzeugs mit einer solchen elektrischen Maschine als Antriebsmotor werden ferner Kraftübertragungsmittel bereitgestellt und derart mit der Rotorwelle verbunden, dass die Maschine zumindest ein Rad des Schienenfahrzeugs antreiben kann. Das Gehäuse wird z. B. an einem Drehgestell des Schienenfahrzeugs befestigt.

Ausführungsbeispiele der Erfindung werden nun unter Bezugnahme auf die beigefügte Zeichnung beschrieben. Die einzelnen Figuren in der Zeichnung zeigen:
- Figur 1: einen Längsschnitt durch eine erste Ausführungsform eines Gehäuses für eine elektrische Maschine,
- Figur 2: eine perspektivische Darstellung des Gehäuses gemäß Figur 1,
- Figur 3: eine Ansicht auf die Stirnseite des in Figur 1 und Figur 2 dargestellten Gehäuses, wobei die Stirnseite durch ein Lagerschild des Gehäuses gebildet wird, und wobei ebenfalls, wie in Figur 2, Teile des Gehäuses weggelassen sind, um den Blick in diesem Fall auf das Innere des Lagerschildes freizugeben,
- Figur 4: eine schematische, vereinfachte Seitenansicht eines Gehäuses für eine elektrische Maschine,
- Figur 5: eine vereinfachte stirnseitige Ansicht auf das Lagerschild des in Figur 4 dargestellten Gehäuses,
- Figur 6: einen Querschnitt durch das Lagerschild des in Figur 4 und Figur 5 dargestellten Gehäuses, wobei der Querschnitt einen Kanal für Kühlflüssigkeit zeigt, und
- Figur 7: einen Längsschnitt durch den oberen Teil des in Figur 4 bis 6 dargestellten Gehäuses.

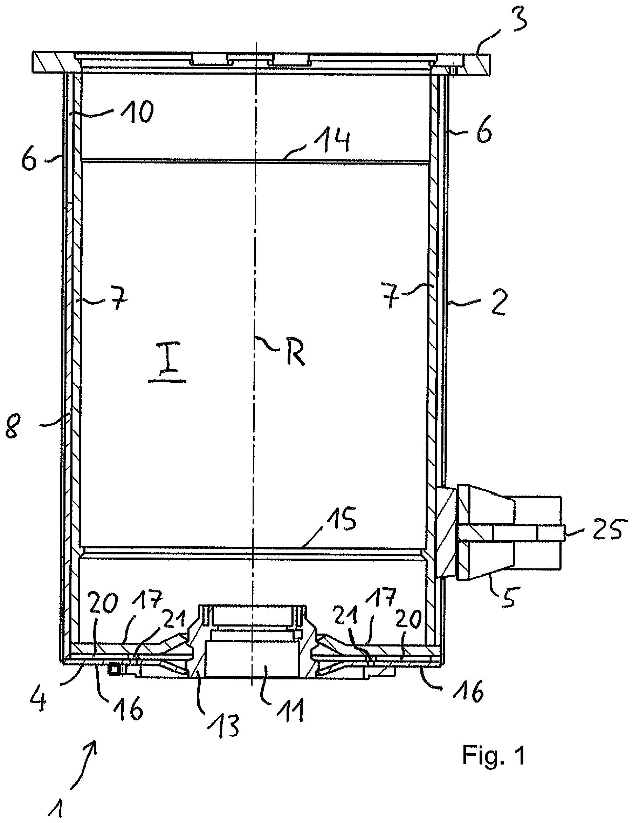

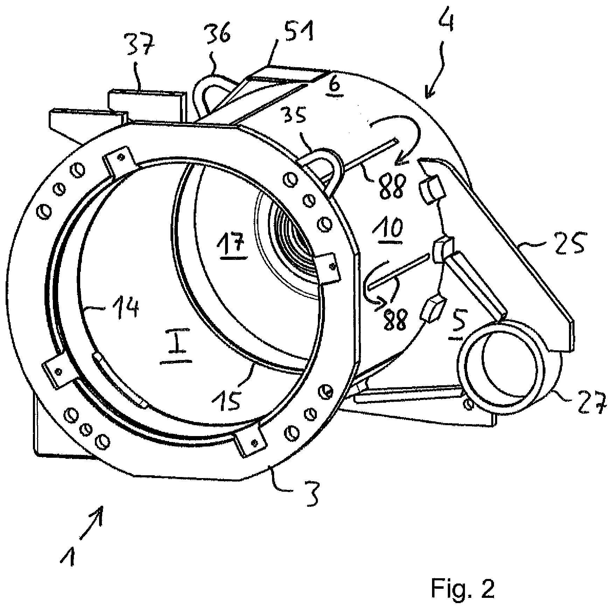

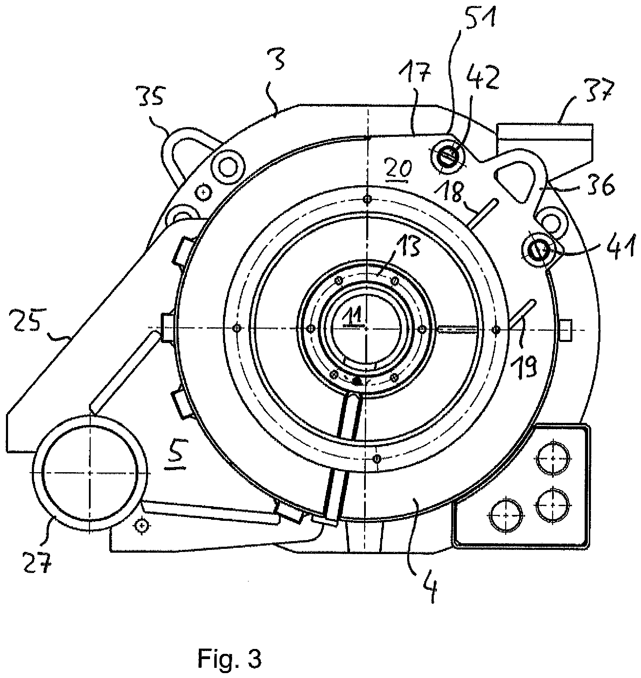

Das in Figur 1 bis Figur 3 dargestellte Gehäuse 1 für eine elektrische Maschine (nicht dargestellt) weist einen in Umfangsrichtung um einen Innenraum I umlaufenden Mantel 2 auf, der sich im Wesentlichen rotationssymmetrisch um die Drehachse R der Rotorwelle der Maschine erstreckt. An einem stirnseitigen Ende (oben in Figur 1, vorne in Figur 2 und hinten in Figur 3) ist ein mit einem Flansch versehener Gehäusedeckel 3 mit dem Umfangsmantel 2 verbunden. Alle Verbindungen zwischen Einzelteilen des Gehäuses sind, sofern nicht anders beschrieben, vorzugsweise durch Schweißen hergestellt.

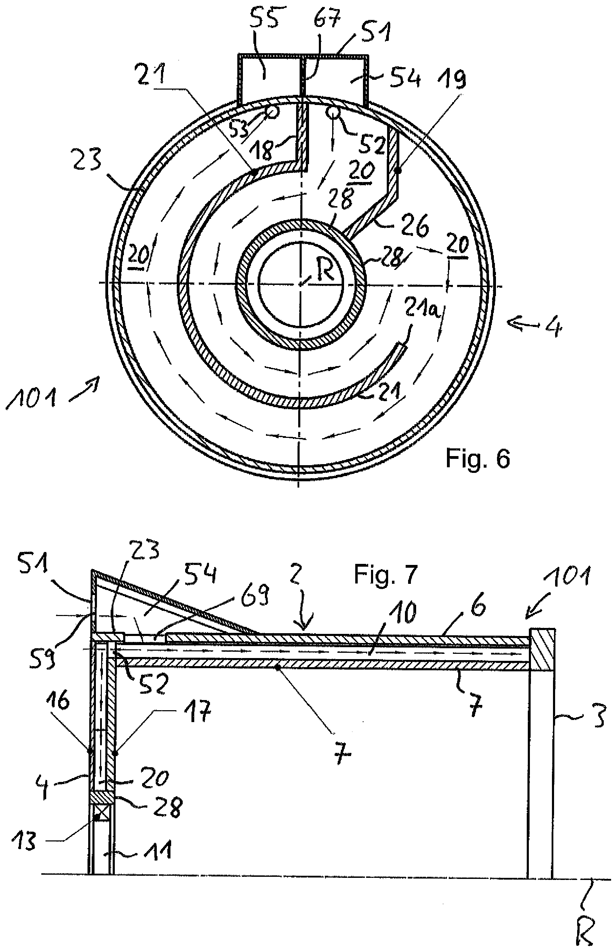

Am anderen stirnseitigen Ende des Umfangsmantels 2 ist ein Lagerschild 4 (unten in Figur 1, hinten in Figur 2 und vorne in Figur 3) mit dem Umfangsmantel 2 verbunden. Die Drehachse R erstreckt sich durch eine zu dieser Drehachse R rotationssymmetrische Durchtrittsöffnung 11 eines Lagers 13 für die Rotorwelle der elektrischen Maschine. Das Lager 13 ist Teil des Lagerschildes 4. Es ist mit den im Wesentlichen kreisförmigen Innenrändern einer Innenwand 17 und einer Außenwand 16 des Lagerschildes 4 verbunden. Dabei kann das Lager insbesondere über ein zur Drehachse R rotationssymmetrisches, ringförmiges Element (siehe z. B. Figur 7) mit den Innenrändern verbunden sein. Dies kann auch bei anderen Ausgestaltungen des Gehäuses der Fall sein.

Zwischen der Innenwand 17 und der Außenwand 16 befindet sich ein Zwischenraum, der einen Kanal 20 für Kühlflüssigkeit bildet, wobei zusätzliche Kanalwände 21 sich in der Art von Stegen von der Außenoberfläche der Innenwand 17 zu der Innenoberfläche der Außenwand 16 erstrecken und so den Kanal 20 in mehrere aufeinander folgende Abschnitte unterteilen. Eine ähnliche, vereinfachte Gestaltung eines Lagerschildes wird noch anhand von Figur 6 beschrieben. Die in der Figur 6 gezeigte Kanalführung kann insbesondere auch bei dem Lagerschild 4 gemäß Figur 1 bis Figur 3 vorhanden sein. Um die Kühlflüssigkeit in den Kanal 20 einzuleiten und aus dem Kanal 20 abzuleiten, sind am Rand der Innenwand 17 eine erste Durchtrittsöffnung 41 und eine zweite Durchtrittsöffnung 42 vorhanden, die einen Flüssigkeitsdurchtritt in Längsrichtung des Gehäuses 1 (vertikale Richtung in Figur 1 und senkrecht zur Bildebene in Figur 3) ermöglichen. Figur 3 zeigt dabei nicht alle Teile des Lagerschildes, die die Kanalwände des Kanals 20 bilden. Die Innenwand 17 und die Außenwand 16 sind im Wesentlichen kreisringförmige Platten.

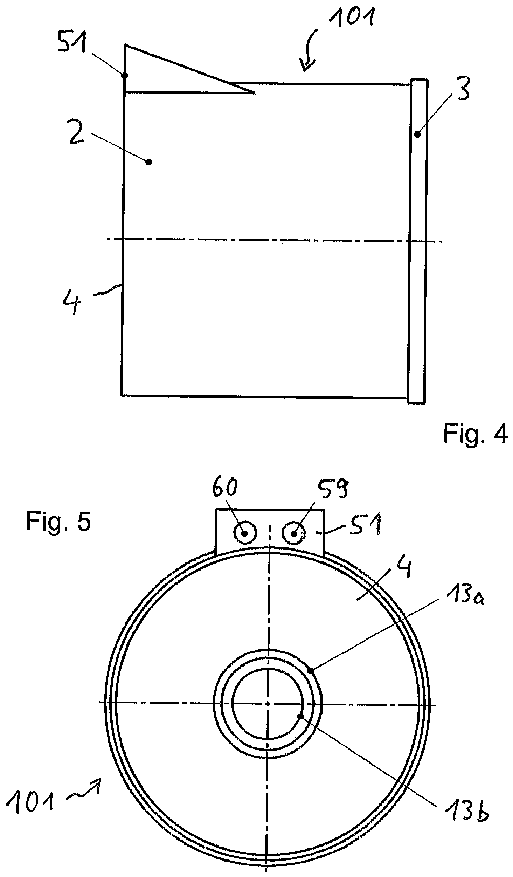

Nicht nur diese Wände 16, 17, sondern alle miteinander verbundenen Teile des Gehäuses, mit Ausnahme äußerer Befestigungsteile zur Befestigung des Gehäuses an seiner Umgebung, sind vorzugsweise aus Metall, insbesondere Stahl oder Aluminium, und miteinander verschweißt oder verlötet. Dies gilt nicht nur für das Gehäuse gemäß Figur 1 bis Figur 3 oder das Gehäuse gemäß Figur 4 bis Figur 7, sondern auch für andere Ausgestaltungen und Ausführungsformen des erfindungsgemäßen Gehäuses.

Die Konstruktion des Lagerschildes mit einer Innenwand und einer Außenwand, die über stegartige zusätzliche Kanalwände gegeneinander abgestützt sind, und von denen zumindest ein Drehlager für die Rotorwelle der elektrischen Maschine eingefasst wird, stellt eine sehr stabile und gleichzeitig einfach herzustellende und Material sparende Ausgestaltung eines Lagerschildes dar. Entsprechendes gilt für die doppelwandige Konstruktion des Umfangsmantels, der im Folgenden beschrieben wird.

Der Umfangsmantel 2 gemäß Figur 1 bis Figur 3 weist eine Innenwand 7 in Form eines Rohres und eine Außenwand 6 in Form eines Rohres mit größerem Innendurchmesser als des ersten Rohres auf. Die Außenoberfläche der Innenwand 7 ist über stegartige zusätzliche Kanalwände 8 (links in Figur 1 erkennbar) mit der Innenoberfläche der Außenwand 6 verbunden. Bei den zusätzlichen Kanalwänden 8 handelt es sich um lang gestreckte, in Längsrichtung des Gehäuses 1 verlaufende Elemente. Figur 2 zeigt lang gestreckte Schlitze 88 in der Außenwand 6, die parallel zu den zusätzlichen Kanalwänden 8 verlaufen. Vorzugsweise ist jeder der den zusätzlichen Kanalwände 8 ein solcher Schlitz 88 zugeordnet. Das radial außen liegende Ende der jeweiligen zusätzlichen Kanalwand 8 deckt den zugeordneten Schlitz an seiner Innenseite zumindest teilweise ab. Zur Verbindung der zusätzlichen Kanalwände 8 mit der Außenwand 6 werden die Schlitze 88 durch eine Schweißnaht oder durch Löten verschlossen, sodass zwischen Schweißnaht bzw. Lot einerseits und Kanalwand 8 keine Kühlflüssigkeit hindurchtreten kann und auch keine Kühlflüssigkeit durch die Außenwand 6 radial nach außen hindurchtreten kann. Dabei erstrecken sich die zusätzlichen Kanalwände 8 in Längsrichtung vorzugsweise über zumindest eines der Enden des zugeordneten Schlitzes 88 hinaus.

Dadurch, dass die lang gestreckten Elemente 8 in einem Abstand zu jeweils einem stirnseitigen Ende des Umfangsmantels 2 enden, wird ein serpentinenförmiger Kanal 10 gebildet. Die Strömungsrichtung ist in Figur 2 durch zwei gebogene Pfeile partiell angedeutet und das Bezugszeichen 10 des Kanals 10 ist eingezeichnet, obwohl der Kanal 10 in Figur 2 durch die Außenwand 6 abgedeckt ist. In Figur 1 erkennt man links oben einen Teil des Kanals 10 am Übergang von zwei sich in Längsrichtung erstreckenden Bereichen, die zwischen zwei der lang gestreckten Elemente 8 verlaufen. Der in Figur 1 dargestellte Übergangsbereich des Kanals 10 endet stirnseitig am Ansatz des Flansches des Gehäusedeckels 3. Wie noch an dem vereinfacht dargestellten Ausführungsbeispiel der Figuren 4 bis 7 beschrieben wird, ist der Kanal 10 vorzugsweise über zumindest eine Durchtrittsöffnung mit dem Kanal 20 des Lagerschildes 4 verbunden, so dass die Kanäle 10, 20 strömungstechnisch parallel von Kühlflüssigkeit durchflossen werden können (Ausführungsform der Figuren 4 bis 7) oder strömungstechnisch in Serie von Kühlflüssigkeit durchflossen werden können (nicht dargestellt).

Die Figuren 1 bis 3 zeigen außerdem noch Anbauteile 5, 25, 35, 36, 37, die der Befestigung des Gehäuses 1 und/oder der Verbindung mit Anbauteilen (z. B. Ring 27) dienen. Insbesondere die ösenförmigen Anbauteile 35, 36 können auch zum Transport des Gehäuses genutzt werden. Der Ring 27 dient beispielsweise der Aufnahme von Kraftübertragungselementen, über die eine Antriebskraft der Rotorwelle auf zumindest ein Rad eines Schienenfahrzeugs übertragen wird oder umgekehrt - im Generatorbetrieb - Kraft auf die Rotorwelle übertragen wird. Sämtliche Anbauteile 5, 25, 35, 36, 37 können entfallen, modifiziert werden oder durch andere Anbauteile ersetzt werden, sofern es für die Anpassung und Befestigung des Gehäuses an seine Umgebung zweckmäßig oder erforderlich ist. Grundlegende Teile des in Figur 1 bis Figur 3 dargestellten Gehäuses, die für die Erfindung von wesentlicher Bedeutung sind, jedenfalls in Bezug auf das bevorzugte Ausführungsbeispiel, sind die Innenwände und Außenwände des Lagerschildes und des Umfangsmantels sowie die zusätzlichen Kanalwände, die die jeweilige Innenwand mit der jeweiligen Außenwand verbinden.

Figur 1 und Figur 2 zeigen außerdem noch ringförmige Teile 14, 15, die von der Innenoberfläche der Innenwand 17 des Umfangsmantels 2 in den Innenraum I hineinragen. Sie dienen der Abstützung der elektrischen Maschine und/oder der Aussteifung des Umfangsmantels. Wie Figur 1 außerdem zeigt, ist die Wandstärke der Innenwand 7 größer als die Wandstärke der Außenwand 6. Daher ist das Anbauteil 5, das aus mehreren Elementen besteht, an der Außenoberfläche der Innenwand 7 befestigt.

Eine größere Wandstärke der jeweiligen Innenwand des Umfangsmantels oder Lagerschildes wird auch bei anderen Ausführungsformen und Ausgestaltungen des Gehäuses bevorzugt. Die Innenwände können somit das tragende Gerüst des Gehäuses bilden. Die Außenwände dienen im Wesentlichen der Abdeckung und Berandung der Kanäle nach außen. Selbstverständlich können die Außenwände zusätzlich zur Stabilisierung des Gehäuses beitragen. Ein Vorteil der geringeren Wandstärke der Außenwände ist, dass die Herstellung der dauerhaften Verbindung mit den stegartigen zusätzlichen Kanalwänden erleichtert ist. Ein weiterer Vorteil ist der verbesserte Wärmeübergang nach außen, insbesondere von der erwärmten Kühlflüssigkeit, aber auch über die stegartigen zusätzlichen Kanalwände.

Figur 2 und Figur 3 zeigen ferner, dass im Bereich der Durchtrittsöffnungen 41, 42 am äußeren Bereich des Umfangsmantels 2 ein vorspringender Bereich 51 gebildet ist, der insbesondere für das Zuführen und Ableiten der Kühlflüssigkeit genutzt wird, wie es z. B. noch anhand von Figur 4 bis Figur 7 beschrieben wird.

Die in Figuren 4 bis 7 dargestellte, vereinfachte Ausführungsform eines Gehäuses dient insbesondere der Beschreibung, wie Kühlflüssigkeit die Kanäle 10, 20 in dem Umfangsmantel 2 und dem Lagerschild 4 durchströmen kann. In den Figuren 4 bis 7 werden für Teile mit gleicher Funktion wie bei der Ausführungsform der Figuren 1 bis 3 die gleichen Bezugszeichen verwendet. Aufgrund der vereinfachten Darstellung, aber auch weil es sich um ein bestimmtes Ausführungsbeispiel handelt, können Abweichungen und Unterschiede der Teile vorhanden sein, die mit denselben Bezugszeichen bezeichnet werden.

Figur 4 zeigt eine Seitenansicht des Gehäuses 101, wobei rechts im Bild der Gehäusedeckel 3 und links im Bild das Lagerschild 4 angeordnet sind. Der Umfangsmantel 2 verbindet Gehäusedeckel 3 mit Lagerschild 4. Oben in Figur 4 ist ein vorspringender Bereich 51 erkennbar, der der Zuführung und Ableitung der Kühlflüssigkeit dient. Ein Längsschnitt durch die obere Hälfte des Gehäuses 101 ist in Figur 7 dargestellt. Dort erkennt man, dass der vorspringende Bereich 51 zumindest eine in der Darstellung von Figur 7 nach links offene Durchtrittsöffnung 59 aufweist, die in dem Ausführungsbeispiel die Eintrittsöffnung für Kühlflüssigkeit in das Gehäuse 101 ist. Wie jedoch Figur 5 zeigt, befindet sich parallel neben der Eintrittsöffnung 59 noch eine Austrittsöffnung 60 zum Ableiten der erwärmten Kühlflüssigkeit aus dem Gehäuse 101.

Der vorspringende Bereich 51 ist (wie Figur 6 zeigt) durch eine Trennwand 67 in zwei Räume 54, 55 unterteilt. Die in das Gehäuse 101 zugeführte Kühlflüssigkeit tritt durch die Eintrittsöffnung 59 in den in Figur 6 rechts dargestellten Raum 54 ein (siehe auch Figur 7) und von dort durch eine Durchtrittsöffnung 69 in der Außenwand 6 des Umfangsmantels 2 in den Zwischenraum zwischen Außenwand 6 und Innenwand 7 des Umfangsmantels 2.

In dem Ausführungsbeispiel strömt die Kühlflüssigkeit (wie durch Pfeile in Figur 6 und Figur dargestellt ist) sowohl in den Kanal 10 innerhalb des Umfangsmantels 2, als auch (durch eine Durchtrittsöffnung 52 in der Innenwand 17 des Lagerschildes 4) auch in den Kanal 20 innerhalb des Lagerschildes 4. Daher sind die Kanäle 10, 20 strömungstechnisch parallel angeordnet.

Während die Kühlflüssigkeit in dem Ausführungsbeispiel innerhalb des Kanals 10 einen serpentinenartig um den Innenraum I herumführenden Strömungsweg durchströmt (siehe z. B. die beiden gekrümmten Pfeile in Figur 2), durchläuft die Kühlflüssigkeit innerhalb des Lagerschildes 4 (siehe Figur 6) sich um die Drehachse R der Rotorwelle herum erstreckende Abschnitte des Kanals 20. In der Darstellung der Figur 6 verläuft der erste dieser beiden Abschnitte von der Durchtrittsöffnung 52 zunächst radial nach innen und dann im Gegenuhrzeigersinn fast vollständig um die Drehachse R herum. Dort geht der erste Abschnitt in den zweiten Abschnitt über, der sich in größerem Abstand zu der Drehachse R in der Darstellung von Figur 6 im Uhrzeigersinn um die Drehachse R herumerstreckt, bis die Kühlflüssigkeit durch die Durchtrittsöffnung 53 in der Innenwand 17 des Lagerschildes 4 wieder in den Zwischenraum zwischen der Innenwand 7 und der Außenwand 6 des Umfangsmantels 2 eintritt (nicht dargestellt, aber entsprechend der Darstellung in Figur 7). Von dort tritt die Kühlflüssigkeit durch eine ebenfalls nicht dargestellte Durchtrittsöffnung, die der Durchtrittsöffnung 69 in Figur 7 entspricht, in den Raum 55 des vorspringenden Bereichs 51 ein und durch diesen hindurch aus der Austrittsöffnung 60 aus. Ebenfalls durch die nicht dargestellte Durchtrittsöffnung in der Außenwand 6 des Umfangsmantels 2 tritt die erwärmte Kühlflüssigkeit aus dem Umfangsmantel hindurch, die den serpentinenförmigen Weg durchlaufen hat. Auch diese Kühlflüssigkeit, die sich mit der erwärmten Kühlflüssigkeit aus dem Lagerschild 4 mischt, tritt durch den Raum 55 hindurch und aus der Austrittsöffnung 60 aus.

Die zuvor beschriebenen Abschnitte des Kanals 20 in dem Lagerschild 4 werden durch verschiedene so genannte zusätzliche Kanalwände gebildet, die die Innenwand 17 und die Außenwand 16 des Lagerschildes 4 miteinander verbinden. Außerdem wird der Strömungskanal 20 am Außenumfang des Lagerschildes durch den Endabschnitt 23 der Außenwand 6 des Umfangsmantels berandet (wie links oben unterhalb des vorspringenden Bereichs 51 in Figur 7 dargestellt ist). Ferner wird der in radialer Richtung innen liegende Rand des ersten, radial weiter innen liegenden Abschnitts des Kanals 20 durch ein in Längsrichtung sehr kurzes, der Dicke des Lagerschildes 4 entsprechendes rohrförmiges Teil 28 (kann auch als Ring bezeichnet werden) gebildet. Auch dieses Teil 28 ist eine zusätzliche Kanalwand, erstreckt sich aber nicht lediglich zwischen der Außenoberfläche der Innenwand 17 und der Innenoberfläche der Außenwand 16, sondern im Ausführungsbeispiel von der Innenoberfläche der Innenwand 17 bis zur Außenoberfläche der Außenwand 16.

Stegförmige (sofern im Längsschnitt, wie z. B. in Figur 1, betrachtet) so genannte zusätzliche Kanalwände, die an der Außenoberfläche mit der Innenwand 17 verbunden sind und an der Innenoberfläche mit der Wand 16 verbunden sind, sind in Figur 6 dargestellt und mit den Bezugszeichen 18, 19, 21 und 26 bezeichnet. Die Elemente 18, 19 erstrecken sich geradlinig in ihrem Verlauf, wenn der Querschnitt gemäß Figur 6 betrachtet wird. In dem Querschnitt verläuft die Drehachse R der Rotorwelle senkrecht zur Bildebene. Beide Elemente 18, 19 erstrecken sich vom kreisringförmigen Endbereich 23 der äußeren Wand 6 des Umfangsmantels 2 aus radial nach innen (Element 18) bzw. parallel dazu, so dass zwischen ihnen der erste Teilabschnitt des ersten Abschnitts des Kanals 20 gebildet ist. An dem in radialer Richtung innen liegenden Ende des Elements 18 setzt ein ringförmiges Element 21 an, das den ersten Abschnitt vom zweiten Abschnitt des Kanals 20 trennt. Allerdings erstreckt sich dieses ringförmige Element 21 nicht in sich geschlossen um die Drehachse R, damit am Ende des ersten Abschnitts der Übergang zum zweiten Abschnitt offen ist. Das gerade Element 19 geht an seinem radial weiter innen liegenden Ende in ein weiteres gerades Element 26 über, wobei die Elemente 19, 26 im Querschnitt betrachtet abgewinkelt zueinander verlaufen.

Aus Figur 7 ist unterhalb des kurzen Rohres 28 das Drehlager 13 für die Rotorwelle dargestellt. Figur 5 zeigt (als Kreislinie dargestellt) den Außenrand 13a und den Innenrand 13b des Lagers 13.

## Patentansprüche

1. Gehäuse (1) für eine elektrische Maschine, wobei das Gehäuse (1) aufweist:
- einen Umfangsmantel (2), der einen Gehäuseinnenraum (I) zur Aufnahme der elektrischen Maschine in Umfangsrichtung umläuft,
- ein Lagerschild (4) zur Lagerung einer Rotorwelle der Maschine,
- Kanäle (10, 20) zum Hindurchleiten von Kühlflüssigkeit,
wobei
- der Umfangsmantel (2) und das Lagerschild (4) einstückig miteinander verbunden sind,
- an und/oder in dem Umfangsmantel (2) sowie in dem Lagerschild (4) jeweils zumindest ein Kanal (10, 20) zum Hindurchleiten von Kühlflüssigkeit vorhanden ist und
- in dem Übergangsbereich des Umfangsmantels (2) zu dem Lagerschild (4) zumindest ein Flüssigkeitsübertritt (52) von einem Kanal (10) des Umfangsmantels (2) zu einem Kanal (20) des Lagerschildes (4) und/oder umgekehrt ausgebildet ist,
**dadurch gekennzeichnet, dass**
das Lagerschild (4) eine Innenwand (17) aufweist, die eine Innenoberfläche des Gehäuses (1) bildet, und wobei an der Außenseite der Innenwand (17) zumindest eine zusätzliche Kanalwand (18, 19, 21, 26) zur Bildung des zumindest einen Kanals (20) des Lagerschildes (4) mit der Innenwand (17) verbunden ist, sodass die Innenwand (17) und die zumindest eine zusätzliche Kanalwand (18, 19, 21, 26) sowie optional weitere Teile den oder die Kanäle (20) des Lagerschildes (4) beranden.

2. Gehäuse nach dem vorhergehenden Anspruch, wobei der Umfangsmantel (2) eine Innenwand (7) aufweist, die den Gehäuseinnenraum (I) in Umfangsrichtung umläuft und wobei an der Außenseite der Innenwand (7) zumindest eine zusätzliche Kanalwand (8) zur Bildung des zumindest einen Kanals (10) des Umfangsmantels (2) mit der Innenwand (7) verbunden ist, sodass die Innenwand (7) und die zumindest eine zusätzliche Kanalwand (8) sowie optional weitere Teile den oder die Kanäle (10) des Umfangsmantels (2) beranden.

3. Gehäuse nach dem vorhergehenden Anspruch, wobei eine Mehrzahl der zusätzlichen Kanalwände (8) mit der Innenwand (7) verbunden ist, wobei zumindest ein Teil der zusätzlichen Kanalwände (8) langgestreckte Elemente sind, die sich in Längsrichtung des Gehäuses (1) erstrecken.

4. Gehäuse nach einem der beiden vorhergehenden Ansprüche, wobei die Innenwand über die zumindest eine zusätzliche Kanalwand (8) mit einer in Umfangsrichtung verlaufenden Außenwand (6) verbunden ist, sodass die Innenwand (7), die zumindest eine zusätzliche Kanalwand (8) und die Außenwand (6) sowie optional weitere Teile den oder die Kanäle (10) des Umfangsmantels (2) beranden.

5. Gehäuse nach einem der vorhergehenden Ansprüche, wobei eine Mehrzahl der zusätzlichen Kanalwände (18, 19, 21, 26) mit der Innenwand (17) verbunden ist, wobei zumindest ein Teil (21) der zusätzlichen Kanalwände (18, 19, 21, 26) langgestreckte Elemente sind, die zumindest teilweise die Drehachse (R) der Rotorwelle der Maschine umlaufen.

6. Gehäuse nach einem der vorhergehenden Ansprüche, wobei die Innenwand (17) über die zumindest eine zusätzliche Kanalwand (18, 19, 21, 26) mit einer in Umfangsrichtung verlaufenden Außenwand (16) verbunden ist, sodass die Innenwand (17), die zumindest eine zusätzliche Kanalwand (18, 19, 21, 26) und die Außenwand (16) sowie optional weitere Teile den oder die Kanäle (20) des Lagerschildes (4) beranden.

7. Verfahren zum Herstellen eines Gehäuses (1) für eine elektrische Maschine, wobei für das Gehäuse (1) bereitgestellt werden:
- ein Umfangsmantel (2), der einen Gehäuseinnenraum (I) zur Aufnahme der elektrischen Maschine in Umfangsrichtung umläuft, und
- ein Lagerschild (4) zur Lagerung einer Rotorwelle der Maschine,
wobei
- der Umfangsmantel (2) und das Lagerschild (4) einstückig miteinander verbunden werden,
- durch Verbinden von Einzelteilen an und/oder in dem Umfangsmantel (2) sowie an und/oder in dem Lagerschild (4) jeweils zumindest ein Kanal (10, 20) zum Hindurchleiten von Kühlflüssigkeit gebildet wird und
- in dem Übergangsbereich des Umfangsmantels (2) zu dem Lagerschild (4) zumindest ein Flüssigkeitsübertritt (52) von einem Kanal (10) des Umfangsmantels (2) zu einem Kanal (20) des Lagerschildes (4) und/oder umgekehrt ausgebildet wird,
**dadurch gekennzeichnet, dass**
für das Lagerschild (4) eine Innenwand (17) bereitgestellt wird, die eine Innenoberfläche des Gehäuses (1) bildet, wobei an der Außenseite der Innenwand (17) zumindest eine zusätzliche Kanalwand (18, 19, 21, 26) zur Bildung des zumindest einen Kanals (20) des Lagerschildes (4) mit der Innenwand (17) verbunden wird, sodass die Innenwand (17) und die zumindest eine zusätzliche Kanalwand (18, 19, 21, 26) sowie optional weitere Teile den oder die Kanäle (20) des Lagerschildes (4) beranden.

8. Verfahren nach Anspruch 7, wobei für den Umfangsmantel (2) eine Innenwand (7) bereitgestellt wird, die den Gehäuseinnenraum (I) in Umfangsrichtung umläuft und wobei an der Außenseite der Innenwand (7) zumindest eine zusätzliche Kanalwand (8) zur Bildung des zumindest einen Kanals (10) des Umfangsmantels (2) mit der Innenwand (7) verbunden wird, sodass die Innenwand (7) und die zumindest eine zusätzliche Kanalwand (8) sowie optional weitere Teile den oder die Kanäle (10) des Umfangsmantels (2) beranden.

## Claims

1. A housing (1) for an electric machine, wherein the housing (1) comprises:
- a peripheral jacket (2), which surrounds a housing interior (I) in the peripheral direction for accommodating the electric machine,
- a bearing shield (4) for supporting a rotor shaft of the machine,
- channels (10, 20) for ducting cooling liquid through,
wherein
- the peripheral jacket (2) and the bearing shield (4) are connected to one another in one piece,
- at least one channel (10, 20) for ducting cooling liquid through is provided on and/or in the peripheral jacket (2) and also in the bearing shield (4), and
- at least one point of transfer (52) for liquid from a channel (10) of the peripheral jacket (2) to a channel (20) of the bearing shield (4) and/or vice versa is formed in the transition region of the peripheral jacket (2) to the bearing shield (4),
**characterised in that**
the bearing shield (4) comprises an inner wall (17), which forms an inner surface of the housing (1), and wherein on the outer side of the inner wall (17) at least one additional channel wall (18, 19, 21, 26) for forming the at least one channel (20) of the bearing shield (4) is connected to the inner wall (17), such that the inner wall (17) and the at least one additional channel wall (18, 19, 21, 26) and optionally further parts bound the one or more channels (20) of the bearing shield (4).

2. The housing according to the preceding claim, wherein the peripheral jacket (2) comprises an inner wall (7), which surrounds the housing interior (I) in the peripheral direction, and wherein on the outer side of the inner wall (7) at least one additional channel wall (8) for forming the at least one channel (10) of the peripheral jacket (2) is connected to the inner wall (7), such that the inner wall (7) and the at least one additional channel wall (8) and optionally further parts bound the one or more channels (10) of the peripheral jacket (2).

3. The housing according to the preceding claim, wherein a plurality of the additional channel walls (8) are connected to the inner wall (7), wherein at least a part of the additional channel walls (8) are elongate elements which extend in the longitudinal direction of the housing (1).

4. The housing according to any one of the two preceding claims, wherein the inner wall is connected by means of the at least one additional channel wall (8) to an outer wall (6) extending in the peripheral direction, such that the inner wall (7), the at least one additional wall (8), and the outer wall (6) and optionally further parts bound the one or more channels (10) of the peripheral jacket (2) .

5. The housing according to any one of the preceding claims, wherein a plurality of the additional channel walls (18, 19, 21, 26) are connected to the inner wall (17), wherein at least a part (21) of the additional channel walls (18, 19, 21, 26) are elongate elements, which surround the axis of rotation (R) of the rotor shaft of the machine at least in part.

6. The housing according to any one of the preceding claims, wherein the inner wall (17) is connected by means of the at least one additional channel wall (18, 19, 21, 26) to an outer wall (16) extending in peripheral direction, such that the inner wall (17), the at least one additional channel wall (18, 19, 21, 26), and the outer wall (16) and optionally further parts bound the one or more channels (20) of the bearing shield (4).

7. A method for producing a housing (1) for an electric machine, wherein the following are provided for the housing (1):
- a peripheral jacket (2), which surrounds a housing interior (I) in the peripheral direction for accommodating the electric machine,
- a bearing shield (4) for supporting a rotor shaft of the machine,
wherein
- the peripheral jacket (2) and the bearing shield (4) are connected to one another in one piece,
- at least one channel (10, 20) for ducting cooling liquid through is formed on and/or in the peripheral jacket (2) and also on and/or in the bearing shield (4) by connection of individual parts, and
- at least one point of transfer (52) for liquid from a channel (10) of the peripheral jacket (2) to a channel (20) of the bearing shield (4) and/or vice versa is formed in the transition region of the peripheral jacket (2) to the bearing shield (4),
**characterised in that**
an inner wall (17) is provided for the bearing shield (4), which inner wall forms an inner surface of the housing (1), wherein on the outer side of the inner wall (17) at least one additional channel wall (18, 19, 21, 26) for forming the at least one channel (20) of the bearing shield (4) is connected to the inner wall (17), such that the inner wall (17) and the at least one additional channel wall (18, 19, 21, 26) and optionally further parts bound the one or more channels (20) of the bearing shield (4).

8. The method according to claim 7, wherein an inner wall (7) is provided for the peripheral jacket (2), which inner wall surrounds the housing interior (I) in the peripheral direction, and wherein on the outer side of the inner wall (7) at least one additional channel wall (8) for forming the at least one channel (10) of the peripheral jacket (2) is connected to the inner wall (7), such that the inner wall (7) and the at least one additional channel wall (8) and optionally further parts bound the one or more channels (10) of the peripheral jacket (2).

## Revendications

1. Boîtier (1) pour une machine électrique, dans lequel le boîtier (1) présente :
- une enveloppe périphérique (2) qui entoure dans la direction périphérique un intérieur de boîtier (I) pour la réception de la machine électrique,
- un flasque (4) pour loger un arbre de rotor de la machine,
- des canaux (10, 20) pour le passage d'un liquide de refroidissement,
dans lequel
- l'enveloppe périphérique (2) et le flasque (4) sont reliés l'un à l'autre d'une seule pièce,
- au moins un canal (10, 20) pour le passage d'un liquide de refroidissement est respectivement présent au niveau de et/ou dans l'enveloppe périphérique (2) ainsi que dans le flasque (4), et
- au moins un passage de fluide (52) allant d'un canal (10) de l'enveloppe périphérique (2) à un canal (20) du flasque (4) et/ou inversement est formé dans la zone de transition de l'enveloppe périphérique (2) au flasque (4) **caractérisé en ce que**
le flasque (4) présente une paroi intérieure (17) qui forme une surface intérieure du boîtier (1) et dans lequel, au niveau de la face extérieure de la paroi intérieure (17), au moins une paroi de canal supplémentaire (18, 19, 21, 26) pour la formation de l'au moins un canal (20) du flasque (4) est reliée à la paroi intérieure (17), de sorte que la paroi intérieure (17) et l'au moins une paroi de canal supplémentaire (18, ·19, 21, 26) ainsi que facultativement d'autres parties délimitent le ou les canaux (20) du flasque (4).

2. Boîtier selon la revendication précédente, dans lequel l'enveloppe périphérique (2) présente une paroi intérieure (7) qui entoure l'intérieur de boîtier (I) dans la direction périphérique et dans lequel, au niveau de la face extérieure de la paroi intérieure (7), au moins une paroi de canal supplémentaire (8) pour la formation de l'au moins un canal (10) de l'enveloppe périphérique (2) est relié à la paroi intérieure (7), de sorte que la paroi intérieure (7) et l'au moins une paroi de canal supplémentaire (8) ainsi que facultativement d'autres parties délimitent le ou les canaux (10) de l'enveloppe périphérique (2).

3. Boîtier selon la revendication précédente, dans lequel une pluralité des parois de canal supplémentaires (8) est reliée à la paroi intérieure (7), dans lequel au moins une partie des parois de canal supplémentaires (8) sont des éléments allongés qui s'étendent dans la direction longitudinale du boîtier (1).

4. Boîtier selon l'une des deux revendications précédentes, dans lequel la paroi intérieure est reliée à une paroi extérieure (6) s'étendant dans la direction périphérique par l'intermédiaire de l'au moins une paroi de canal supplémentaire (8), de sorte que la paroi intérieure (7), l'au moins une· paroi de canal supplémentaire (8) et la paroi extérieure (6) ainsi que facultativement d'autres parties délimitent le ou les canaux (10) de l'enveloppe périphérique (2).

5. Boîtier selon l'une des revendications précédentes, dans lequel une pluralité des parois de canal supplémentaires (18, 19, 21, 26) est reliée à la paroi intérieure (17), dans lequel au moins une partie (21) des parois de canal supplémentaires (18, 19, 21, 26) sont des éléments allongés qui entourent au moins en partie l'axe de rotation (R) de l'arbre de rotor de la machine.

6. Boîtier selon l'une des revendications précédentes, dans lequel la paroi intérieure (17) est reliée par l'intermédiaire de l'au moins une paroi de canal supplémentaire (18, 19, 21, 26) à une paroi extérieure (16) s'étendant dans la direction périphérique, de sorte que la paroi intérieure (17), l'au moins une paroi de canal supplémentaire (18, 19, 21, 26) et la paroi extérieure (16) ainsi que facultativement d'autres parties délimitent le ou les canaux (20) du flasque (4).

7. Procédé de fabrication d'un boîtier (1) pour une machine électrique, dans lequel sont fournis pour le boîtier (1) :
- une enveloppe périphérique (2) qui entoure dans la direction périphérique un intérieur de boîtier (I) pour la réception de la machine électrique, et
- un flasque (4) pour loger un arbre de rotor de la machine,
dans lequel
- l'enveloppe périphérique (2) et le flasque (4) sont reliés l'un à l'autre d'une seule pièce,
- au moins un canal (10, 20) pour le passage d'un liquide de refroidissement est respectivement formé au niveau de et/ou dans l'enveloppe périphérique (2) ainsi qu'au niveau de et/ou dans le flasque (4) par la liaison de pièces détachées, et
- au moins un passage de fluide (52) allant d'un canal (10) de l'enveloppe périphérique (2) à un canal (20) du flasque (4) et/ou inversement est formé dans la zone de transition de l'enveloppe périphérique (2) au flasque (4), **caractérisé en ce que**
une paroi intérieure (17) est fournie pour le flasque (4), laquelle forme une surface intérieure du boîtier (1), dans lequel au moins une paroi de canal supplémentaire (18, 19, 21, 26) pour la formation de l'au moins un canal (20) du flasque (4) est reliée à la paroi intérieure (17) au niveau de la face extérieure de la paroi intérieure (17), de sorte que la paroi intérieure (17) et l'au moins une paroi de canal supplémentaire (18, 19, 21, 26) ainsi que facultativement d'autres parties délimitent le ou les canaux (20) du flasque (4).

8. Boîtier selon la revendication 7, dans lequel une paroi intérieure (7) est fournie pour l'enveloppe périphérique (2), qui entoure l'intérieur du boîtier (I) dans la direction périphérique et dans lequel, au niveau de la face extérieure de la paroi intérieure (7), au moins une paroi de canal supplémentaire (8) pour la formation de l'au moins un canal (10) de l'enveloppe périphérique (2) est reliée à la paroi intérieure (7) de sorte que la paroi intérieure (7) et l'au moins une paroi de canal supplémentaire (8) ainsi que facultativement d'autres parties délimitent le ou les canaux (20) de l'enveloppe périphérique (2).
